# EUROPEAN PATENT APPLICATION

(11) **EP 1 180 606 A1**
(43) Date of publication of application: **20.02.2002**
(21) Application number: 01306580.0
(22) Date of filing: 31.07.2001
(51) Int. Cl.: F16B 5/02, F16B 25/10, B21K 1/56, B23K 11/14, E04D 5/14

(54) **Threaded fastener for use in attaching roofing panels and a method of making the fastener**

(30) Priority: 10.08.2000 JP 2000242066
(71) Applicant: YUGENKAISHA SHINJO SEISAKUSHO, Nishinariku, Osaka (JP)
(72) Inventor: Shinjo, Katsumi, Osaka (JP)
(74) Representative: Price, Paul Anthony King

(57) **Abstract**

An elongate threaded fastener (50) for attaching roofing panels (8) has a first part (20) and a second part (30), both made of steel, and the first part (20) is composed of an elongate non-threaded shank (22) and a fastening rod portion (23) continuing from the shank and of a reduced diameter. The second part (30) is composed of an increased-diameter rod portion (35) and a head (36) formed at the proximal end of this portion. The first and second parts (20,30) are resistance welded together, before a boring means (24) such as a drill tip is formed on the distal end of the fastening rod portion (23). Then, both the fastening and increased-diameter rod portions (23,35) are rolled to form screw threads (23a,35a) respectively on them. The method makes manufacture more efficient when producing the threaded fastener (50) with a proximal threaded rod portion (35) having a large diameter suited to applying a large force to a roofing panel (8).

## Description

### FIELD OF THE INVENTION

The present invention relates to a threaded fastener that may be used to attach roofing panels to beams or the like building frames, with a heat insulator intervening between the panels and the frames. The roofing panel typically of a folded shape may be made by bending a colored or stainless steel panel or the like raw panel to have parallel ridges each of a bottomless trapezoid pattern in cross section. The invention does also relate to a method of making such a threaded fastener.

### PRIOR ART

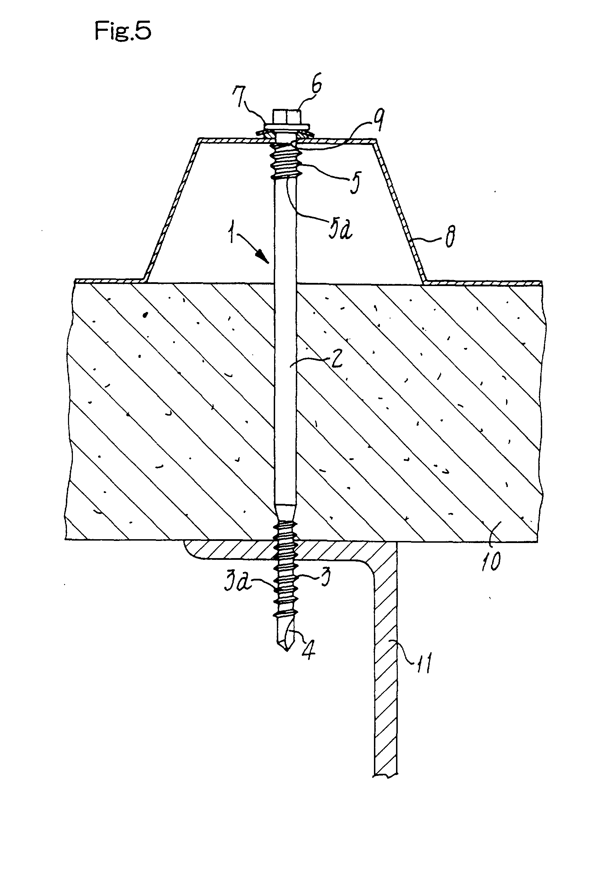

Reducing threaded fasteners 1 as best seen in Fig. 5 are and have been employed for the described purpose. Each of such fasteners 1 comprises a non-threaded elongate rod 2 having opposite ends, and a smaller-diameter threaded portion 3 continuing from one of the ends and disposed behind a boring means such as a drill tip 4. Each fastener 1 further comprises a larger-diameter threaded portion 5 continuing from the other end and formed with a head 6. Usually, a sealing washer 7 may be combined with the head 6 of the fastener 1 when the latter is used to attach the roofing panel to any structural part described above. The drill tip 4 piercing the roofing panel 8 will produce therein a hole 9, before penetrating a heat insulating material 10. A metal frame 11 as one of the beams or the like building materials will then be bored by the drill tip 4 to provide a hole in said frame so that the smaller-diameter threaded portion 3 is screwed into and through the hole. Simultaneously, the larger-diameter threaded portion 5 will be screwed into the first mentioned hole 9 so as to cause the head 6 to press the roofing panel 8 at its outer surface, thereby securing this panel to the metal frame 11. In such a state of the members fastened to each other, the lower surface of said roofing panel 8 is kept in a forced and tight engagement with the larger-diameter threaded portion 5. Thus, the roofing panel 8 can withstand well any strong wind pressure, any amount of snow lying on the roof and any body weight of a roofing worker usually treading same. In a case wherein the beams or the like building frames supporting the roofing panels 8 are wooden articles, the drill tip 4 may be replaced with another boring means such as a pointed gimlet.

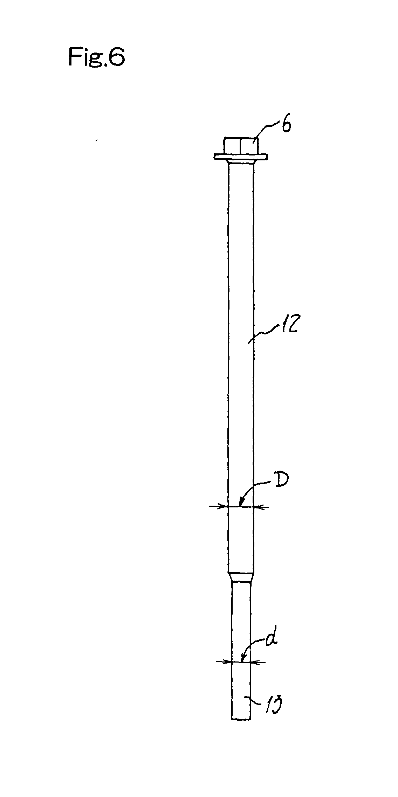

A length of raw rod 12 having a shank diameter 'D' may be used to make the roofing panel fixing fasteners I as summarized above, in a manner as shown in Fig. 6. One end portion of the raw rod 12 will be swaged to give a thinned region 13 of a reduced diameter 'd' ready for subsequent formation of the smaller-diameter threaded portion 3. The other end of the raw rod will be pressed to give the proximal head 6, before rolling these end regions to produce threads 3a and 5a (see Fig. 5) around the smaller- and larger-diameter portions 3 and 5, respectively. It is required that the non-threaded elongate rod 2 can smoothly advance through the hole 9 formed in the roofing panel 8. Therefore, the shank diameter 'D' of this rod 2 has to be almost equal to or slightly less than the outer diameter of the thread 3a of the distal threaded portion 3. In other words, such a body diameter 'D' can not be made much greater than the reduced diameter 'd'.
Consequently, the outer diameter of larger-diameter portion 5 having its thread 5a around the raw rod 12 cannot be much greater than the outer diameter of the thread 3a of distal threaded portion. In a typical example, the diameter of former threaded portion 5 is 6.2 mm and the latter threaded portion 3 has a diameter of 5.5 mm.

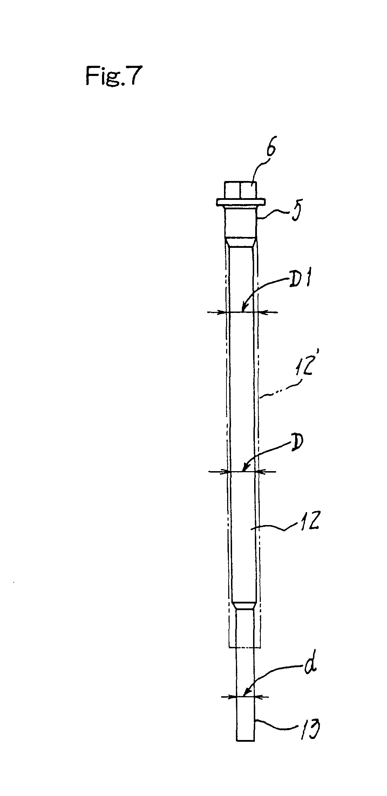

Recently, it has been required to reduce the number of those fasteners 1 necessary for attachment of one unit of the roofing panel. Therefore, each fastener must bear against as heavy a load as possible, by further increasing the diameter of threaded portion 5 adjacent to the proximal head 6. On the other hand, thicker heat insulators 10 have been wanted to improve their effect of heat insulation. This has resulted in much longer non-threaded shanks 2. In order to simply thicken the proximal threaded portion 5 of such an elongated shank 2, a thicker raw rod 12' whose diameter 'D1' is considerably greater than that 'D' noted above has to be used as shown by the phantom lines in Fig. 7. Such a thickened raw rod 12' may be subject to the swaging process two times. The first step in this process will be conducted to form the non-threaded shank 12 of the diameter 'D', with the second step further thinning same to provide an un-threaded distal portion 13 of the diameter 'd' (see Fig. 6). However, this two-step swaging process is not only difficult to effectively carry out but also raises manufacture cost. Thus, such modified types of the roofing panel attaching fasteners have not been adapted for economical production.

### SUMMARY OF THE INVENTION

The present invention was made in view of the drawbacks inherent in the prior art structure. An aspect of the invention is therefore to provide an elongate threaded fastener for attaching the roofing panels, improved such that a proximal threaded portion adjacent to a head of each fastener has a diameter that can readily be made as great as necessary, but not adversely affecting effective and economical production of the fasteners.

According to an aspect of the invention, the present invention provides a threaded fastener for use to attach roofing panels such that the fastener comprises a first threaded part and a second threaded part, both made of a steel, wherein the first threaded part consists of an elongate non-threaded shank and a fastening rod portion continuing therefrom. A boring means such as a drill tip may be formed integral with the distal end of the fastening rod portion. The second threaded part consists of an increased-diameter rod portion that has a head at its proximal end and a screw thread formed on and around the increased-diameter portion to be capable of fixing in position the roofing panels. In the invention, the first and second threaded parts are resistance welded electrically so as to be firmly adjoined one to another.

Preferably, the increased-diameter rod portion of the threaded fastener as summarized above may have an end face whose diameter is substantially equal to the diameter of the raw rod for the first part. This feature will enable a smoother and more uniform welding of the two parts abutting one another. A body of such a rod portion has consequently a diameter larger than that of said end face.

The method provided in the present invention to make such a threaded fastener does characteristically comprise the preliminary step of preparing a first columnar part and a second columnar part, both made of the same or different steels, wherein the first part comprises an elongate non-threaded shank and a fastening rod portion continuing therefrom and of a reduced diameter, and the second part comprises an increased-diameter rod portion that has a head at its proximal end. The present method further comprises the succeeding steps of electrically resistance-welding the first and second parts to be firmly integral with each other, then forming a boring means such as a drill tip on the distal end of the fastening rod portion, and subsequently rolling both the fastening rod portion and increased-diameter rod portion so as to form screw threads respectively on and around these rod portions.

In the present method, the increased-diameter rod portion may have a columnar extension continuing therefrom and of the same diameter as the elongate non-threaded shank, such that the extension is resistance welded to the non-threaded shank so as to firmly unite the first and second parts together.

### BRIEF DESCRIPTION OF THE DRAWINGS

Fig. 1(a) is a front elevation of a raw material that is used to form a first part constituting a threaded fastener that is provided herein to attach the roofing panels;
Fig. 1(b) is a front elevation of the raw material illustrated together with processing members shown fragmentarily and in cross section, that are employed at the step of forming the first part;
Fig. 2(a) is a front elevation of a further raw material used to form a second part also in accordance with the present invention;
Fig. 2(b) is a front elevation of the further raw material illustrated together with further processing members shown fragmentarily and in cross section, that are employed at the step of preparing the second part in its unfinished state;
Fig. 2(c) is a front elevation of the raw material shown with still further processing members that are employed at the step of finishing the second part;
Fig. 3(a) to 3(d) show the succeeding steps of making a threaded fastener from the first and second parts, in which:

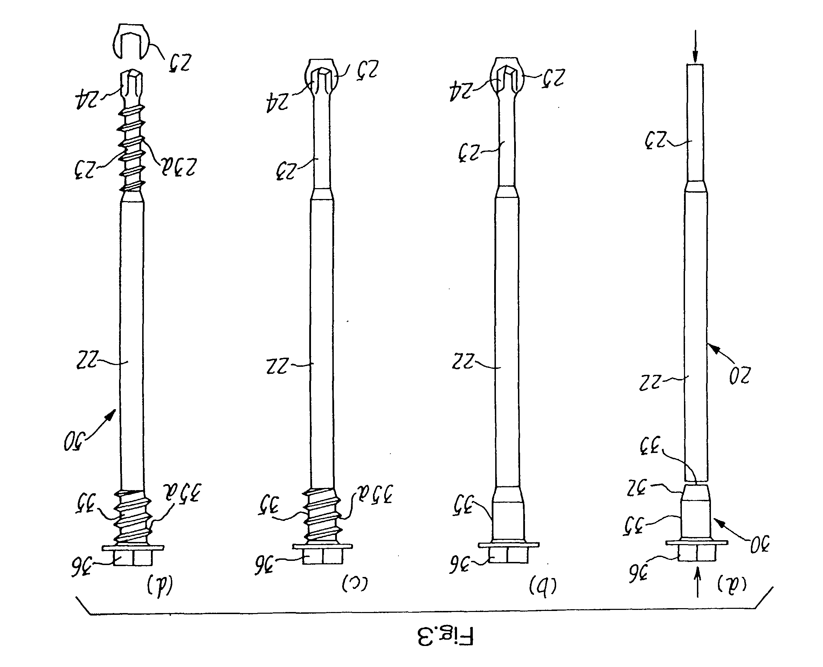

   Fig. 3(a) is a front elevation of the first and second parts at the step of adjoining them one to another;
   Fig. 3(b) is a front elevation of the first and second parts at the step of providing a drill tip integral with the first part by the forming-by-compression method;
   Fig. 3(c) is a front elevation of the first and second parts at the step of forming by the rolling method a screw thread on and around the increased-diameter rod portion of the second part; and
   Fig. 3(d) is a front elevation of the first and second parts at the step of forming by the rolling method another screw thread on and around the fastening rod portion of the first part, and then removing a scrap therefrom;

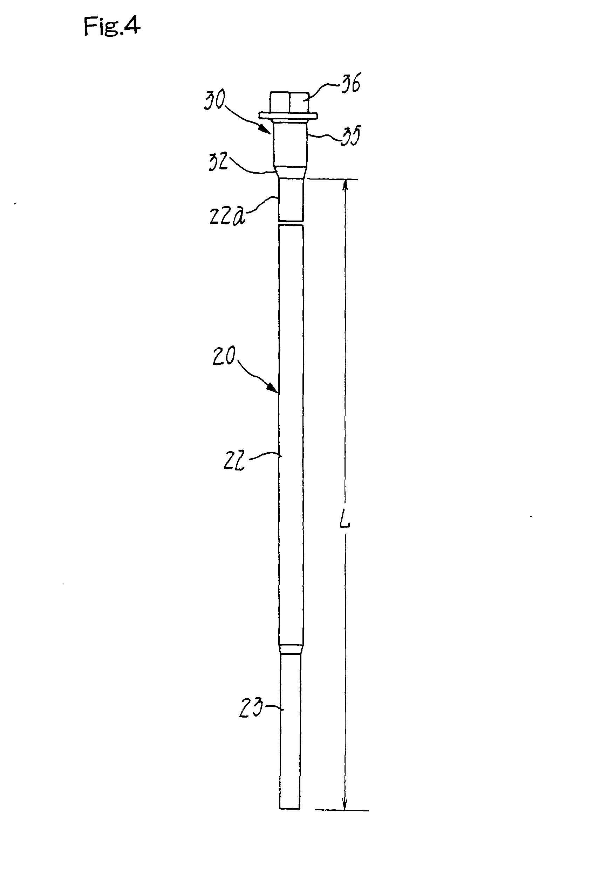

   Fig. 4 is a front elevation of raw materials that are being processed in a modified mode of the present method;
   Fig. 5 is a front elevation of the prior art threaded fastener used to attach the roofing panels, wherein the fastener is shown with relevant articles illustrated fragmentarily and in cross section;
   Fig. 6 is a front elevation of the prior art threaded fastener shown in its unfinished state; and
   Fig. 7 is likewise a front elevation of a modified type of the prior art threaded fastener also shown in its unfinished state.

### THE PREFERRED EMBODIMENTS

Now some embodiments of the present invention will be described in detail referring to the drawings.

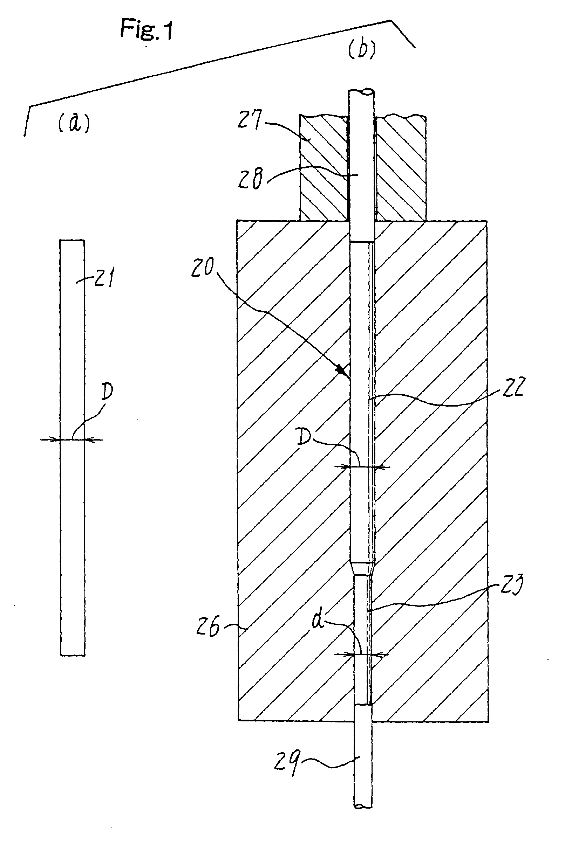

Figs. 1(a) and 1(b) illustrate the step of preparing a first part 20 provided and used herein. A raw steel rod 21will be placed in a swaging die 26, and then a punch 28 descending through a punch guide 27 will press the raw rod 21 downwards. An elongate non-threaded shank 22 having a diameter 'D' is the main portion of the thus pressed rod. A fastening rod portion 23 having a reduced diameter 'd' continues from the bottom of said shank 22 in the first part 20 formed in this manner. In the drawings, the reference numeral 29 denotes an ejecting pin.

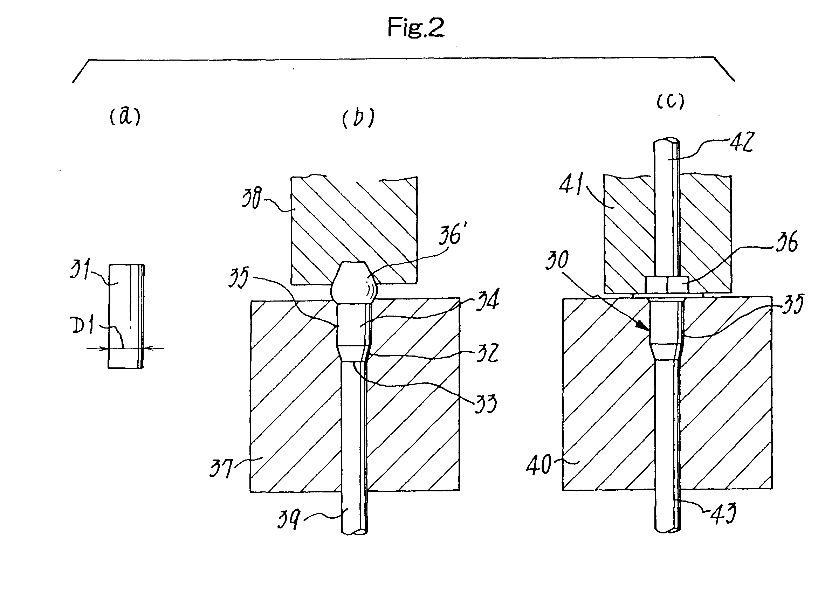

Figs. 2(a) to 2(c) show the step of preparing a second part 30 also used herein. As seen in Figs. 2(a) and 2(b), a shorter raw steel rod 31 having a diameter 'D1' greater than 'D' of the shank will be put at first in a first die 37. A preliminarily forming punch 38 will then press this raw rod 31 so as to force a bottom thereof into a swaged tapered end 32. An increased-diameter rod portion 35 thus prepared will have an end face 33 whose diameter is equal to 'D' and a body 34 whose diameter is 'D1' larger than 'D'. A top of such a raw rod is simultaneously forced to swell in a radial direction to provide an unfinished head 36'. Subsequently, the increased-diameter rod portion 35 will be fitted in a second die 40 as shown in Fig. 2(c). A finishing punch 41 will then press the unfinished head 36' into a finished shape 36 so that the increased-diameter rod portion 35 of second part 30 has a head 36 disposed at the top of this portion 25 having the diameter 'D1'. The reference numerals 39, 42 and 43 in the drawings respectively denote further ejecting pins.

The first and second parts 20 and 30 prepared in the manner described above will now be set in position. In this state shown in Fig. 3(a), the non-threaded shank 22 of first part 20 has its top face abutting the bottom face of the increased-diameter rod portion 35 of second part 30. These top and bottom faces will then be electrically resistance-welded to each other so as to consolidate the first and second parts. Subsequent to this welding step rendering these parts 'one-piece', the distal end of the fastening rod portion 23 will be subjected to the forming-by-compression process. This process as seen in Fig. 3(b) is well known in the art and is not detailed here, but a drill tip 24 will be formed at said end, producing a scrap 25 around the drill tip 25.

Thereafter, a screw thread 35a shown in Fig. 3(c) will be formed on and around the increased-diameter rod portion 35 by the rolling process. It may be possible to carry out this step of forming the thread 35a prior to the former step of forming the drill tip 24 shown in Fig. 3(b).

Finally, such an unfinished product will be subjected to a further rolling step to provide another screw thread 23a around the fastening rod portion 23. Rotation of the unfinished product at this step is utilized to remove the scrap 25, thereby finishing the roofing panel-attaching fastener 50 of the invention. Details of scrap removing technique well known in the art are not given here, and it is possible to remove scrap 25 while the thread 35a is formed on the increased-diameter portion 35.

The threaded fastener 50 manufactured in the described manner is characterized by the remarkably enlarged diameter of its threaded and increased-diameter rod portion 35. This diameter is much greater than that of the thread of fastening rod portion 23 that a roof 8 and various loads applied thereto will now be more surely born by the fastener. Diameter of such a thicker and threaded rod portion 35 can easily be increased furthermore, merely by changing the diameter 'D1' of raw rod 31.

Fig. 4 shows a modification of the method of making the fastener in accordance with the invention. In this modification, a columnar extension 22a extends from the increased-diameter portion 35 of second part 30, across the tapered end 32 thereof. Diameter of this extension 22a is equal to that of the non-threaded shank 22.

The columnar extension 22a formed integral with the second part 30 will enable production of extremely long fasteners 50. Such an extension 22a will have an effect of lengthening the non-threaded shank 22 and thus increasing overall length 'L' of the first part 20, even if this length exceeds the processing limit of the swaging die 26 in Fig. 1(b).

The drill tip 24 is formed at the distal end of the threaded fastening rod portion 23 in the described embodiment. However, it may be replaced with the pointed end of any ordinary gimlet or the like boring means if the roofing panels 8 are attached to wooden beams or the like wooden building frames.

In summary, the threaded fastener of the invention comprises such a proximal threaded rod portion adjacent to the head that the diameter of this portion can readily be increased. By virtue of this feature, the increased-diameter threaded portion can now bear a much heavier load of the roofing panel itself or any external stress imparted thereto.

The method of the invention as defined in claim 2 makes it feasible to manufacture such fasteners (for attaching the roofing panels) more efficiently and at a remarkably improved productivity.

The method defined in claim 3 will make it possible to manufacture certain extremely long fasteners of the described type.

## Claims

1. A threaded fastener (50) for use in attaching roofing panels (8), the fastener comprising a first threaded part (20) and a second threaded part (30), both made of steel, wherein the first threaded part (20) consists of an elongate non-threaded shank (22) and a fastening rod portion (23) continuing therefrom, and a boring means (24) such as a drill tip may be formed integral with the distal end of the fastening rod portion (23),
**CHARACTERIZED IN THAT** the second threaded part (30) consists of an increased-diameter rod portion (35) that has a head (36) at its proximal end and a screw thread (35a) formed on and around the increased-diameter portion (35) to be capable of fixing in position the roofing panels (8), and the first and second threaded parts (20,30) are resistance welded electrically so as to be firmly adjoined one to another.

2. A threaded fastener as defined in claim 1, **characterized in that** the increased-diameter rod portion (35) has an end face (33) whose diameter is substantially equal to the diameter (D) of the raw rod (21) and a body (34) whose diameter (D1) is larger than that (D) of said end face (33).

3. A method of making a threaded fastener (50) for use in attaching roofing panels (8), comprising: the preliminary step of preparing a first columnar part (20) and a second columnar part (30), both made of the same or different steels, wherein the first part (20) comprises an elongate non-threaded shank (22) and a fastening rod portion (23) continuing therefrom and of a reduced diameter,
**CHARACTERIZED IN THAT** the second part (30) comprises an increased-diameter rod portion (35) having a head (36) at its proximal end, the method further comprising the steps of electrically resistance-welding the first and second parts (20,30) to be firmly integral with each other, then forming a boring means (24) such as a drill tip on the distal end of the fastening rod portion (23), and subsequently rolling both the fastening rod portion (23) and increased-diameter rod portion (35) so as to form screw threads (23a,35a) respectively on and around these rod portions (23,35).

4. The method as defined in claim 3, **characterized in that** the increased-diameter rod portion (35) has a columnar extension (22a) continuing therefrom and of the same diameter as the elongate non-threaded shank (22), such that the extension (22a) is resistance welded to the non-threaded shank (22) so as to firmly unite the first and second parts (20,30) together.
